# EUROPÄISCHE PATENTSCHRIFT

(11) **EP 1 784 272 B1**
(45) Veröffentlichungstag und Bekanntmachung des Hinweises auf die Patenterteilung: **14.01.2009**
(21) Anmeldenummer: 05778466.2
(22) Anmeldetag: 03.08.2005
(51) Int. Cl.: B23K 1/00, B21D 39/06, F16L 41/08, F28F 9/16, B60H 1/32

(54) **VERFAHREN ZUM VERBINDEN VON BAUTEILEN**
METHOD FOR CONNECTING COMPONENTS
PROCEDE POUR ASSEMBLER DES PIECES

(30) Priorität: 11.08.2004 DE 102004038932
(43) Veröffentlichungstag der Anmeldung: 16.05.2007
(73) Patentinhaber: MTU Aero Engines GmbH, 80995 München (DE)
(72) Erfinder: MEIER, Reinhold, 84405 Dorfen (DE)
(86) Internationale Anmeldenummer: PCT/DE2005/001367
(87) Internationale Veröffentlichungsnummer: WO 2006/015578

(56) Entgegenhaltungen:
- US-A- 5 295 302

## Beschreibung

Die Erfindung betrifft ein Verfahren zum Verbinden von Bauteilen, nämlich zum Verbinden mindestens eines rohrförmigen oder stabförmigen Bauteils mit einem wandartigen Bauteils (siehe US-A-5 295 302).

Bei der Herstellung bzw. Fertigung von insbesondere Wärmetauschern müssen Bauteile mit komplexen Geometrien miteinander verbunden werden. So müssen bei der Fertigung von Wärmetauschern zum Beispiel als Lanzettenrohre ausgebildete, rohrförmige Bauteile mit als Strömungsrohren ausgebildeten, wandartigen Bauteilen verbunden werden. Die Verbindung solcher Bauteile mit komplexen Geometrien erfolgt nach dem Stand der Technik durch Hochtemperaturlöten. Das Hochtemperaturlöten ist sehr aufwendig und erfordert eine hohe Genauigkeit und damit einen hohen Prozessaufwand. Das Hochtemperaturlöten bereitet insbesondere dann Schwierigkeiten, wenn die Werkstoffpaarungen der miteinander zu verbindenden Bauteile nicht löttauglich sind. Oft ist auch ein hoher Nachlötaufwand erforderlich, was letztendlich die Verbindung von Bauteilen durch Hochtemperaturlöten teuer macht. Das Verbinden von Bauteilen durch Hochtemperaturlöten ist demnach mit einer Vielzahl von Nachteilen verbunden.

Hiervon ausgehend liegt der vorliegenden Erfindung das Problem zu Grunde ein neuartiges Verfahren zum Verbinden von Bauteilen zu schaffen.

Dieses Problem wird durch ein Verfahren zum Verbinden von Bauteilen im Sinne von Patentanspruch 1 gelöst. Erfindungsgemäß umfasst das Verfahren die folgenden Schritte: a) Bereitstellen eines wandartigen Bauteils, wobei das wandartige Bauteil eine sandwichartige Struktur aus zwei plattenförmigen oder rohrförmigen Elementen mit einer dazwischen positionierten Lage aus einem aufschäumbaren Metallwerkstoff aufweist; b) Bereitstellen mindestens eines rohrförmigen oder stabförmigen Bauteils; c) Einbringen mindestens einer Öffnung in das wandartige Bauteil zur Aufnahme des oder jedes rohrförmigen oder stabförmigen Bauteils; d) Einstecken des oder jedes rohrförmigen oder stabförmigen Bauteils in eine entsprechende Öffnung des wandartigen Bauteils; e) Erhitzen der Anordnung aus dem wandartigen Bauteil und dem oder jedem rohrförmigen oder stabförmigen Bauteil unter Aufschäumen des aufschäumbaren Metallwerkstoffs zum Verbinden des oder jedes rohrförmigen oder stabförmigen Bauteils mit dem wandartigen Bauteil.

Im Sinne der hier vorliegenden Erfindung wird ein völlig neuartiges Verfahren zum Verbinden von Bauteilen vorgeschlagen. So liegt es im Sinne der hier vorliegenden Erfindung, ein wandartiges Bauteil mit einer sandwichartigen Struktur bereitzustellen, wobei zwischen zwei plattenförmigen oder rohrförmigen Elementen dieser sandwichartigen Struktur eine Lage aus einem aufschäumbaren Metallwerkstoff positioniert ist. In dieses wandartige Bauteil wird mindestens eine Öffnung bzw. Ausnehmung zur Aufnahme des mit dem wandartigen Bauteil zu verbindenden, stabförmigen oder rohrförmigen Bauteils eingebracht, wobei nach Einstecken des oder jedes rohrförmigen oder stabförmigen Bauteils in die entsprechenden Öffnung die so bereitgestellte Anordnung unter Aufschäumen des aufschäumbaren Metallwerkstoffs erhitzt wird, um das rohrförmige bzw. stabförmige Bauteil mit dem wandartigen Bauteil fest zu verbinden. Hierdurch kann auf das aufwendige Hochtemperaturlöten verzichtet werden. Des weiteren können auch Bauteile miteinander verbunden werden, deren Werkstoffpaarungen nicht löttauglich sind.

Vorzugsweise wird das oder jedes rohrförmige oder stabförmige Bauteil an einem Ende bzw. Abschnitt, mit welchen dasselbe in die entsprechende Öffnung des wandartigen Bauteils eingesteckt wird, mit einem Lotmittel beschichtet. Hierdurch wird die Qualität der Verbindung verbessert.

Nach einer vorteilhaften Weiterbildung der Erfindung wird das Ende bzw. der Abschnitt des rohrförmigen Bauteils, mit welchen dasselbe in eine entsprechende Öffnung des wandartigen Bauteils eingesteckt wird, vor dem Einstecken des rohrförmigen Bauteils in die entsprechende Öffnung des wandartigen Bauteils bzw. vor dem Erhitzen und damit Aufschäumen mit einem stopfenartigen Element verschlossen, wobei nach dem Aufschäumen das stopfenartige Element aus dem Ende bzw. Abschnitt des rohrförmigen Bauteils entfernt wird. Hierdurch können Beschädigungen der meist dünnwandigen, rohrförmigen Bauteile beim Aufschäumen vermieden werden.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

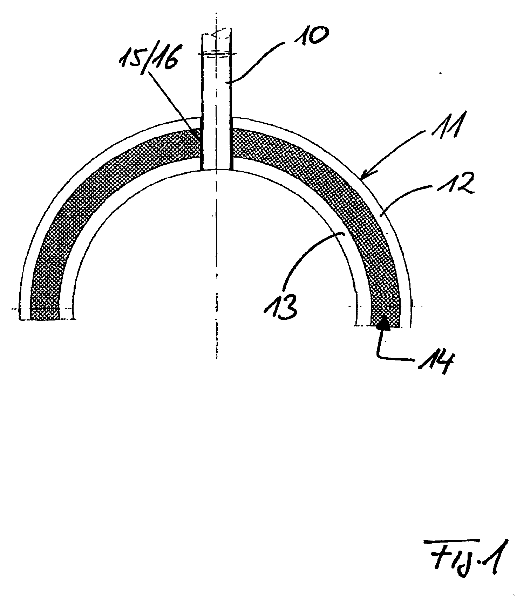

- Fig. 1: einen ausschnittsweisen Querschnitt durch ein wandartiges Bau- teil mit einem mit dem wandartigen Bauteil zu verbindenden, rohrförmigen bzw. stabförmigen Bauteil zur Verdeutlichung des erfindungsgemäßen Verfahrens.

Nachfolgend wird die hier vorliegende Erfindung unter Bezugnahme auf Fig. 1 in größerem Detail beschrieben.

Fig. 1 zeigt ein rohrförmiges Bauteil 10, welches mit einem wandartigen Bauteil 11 im Sinne des erfindungsgemäßen Verfahrens zu verbinden ist. Bei dem gezeigten rohrförmigen Bauteil 10 handelt es sich um ein Lanzettenrohr eines Wärmetauschers, bei dem wandartigen Bauteil 11 um ein zylinderförmiges Strömungsrohr des Wärmetauschers, welches im Querschnitt ein kreisrundes Profil aufweist.

Im Sinne der hier vorliegenden Erfindung wird ein wandartiges Bauteil 11 bereitgestellt, welches über eine sandwichartige Struktur verfügt. Die sandwichartige Struktur wird im gezeigten Ausführungsbeispiel von zwei rohrförmigen Elementen 12 und 13 gebildet, wobei zwischen den beiden rohrförmigen Elementen 12 und 13 eine Lage 14 aus einem aufschäumbaren Metallwerkstoff angeordnet ist. Die Lage 14 aus dem aufschäumbaren Metallwerkstoff wird von einem gesinterten Metallpulver und mindestens einem Treibmittel gebildet. Hierzu wird ein Metallpulver mit einem Treibmittel gemischt, wobei diese Mischung aus Metallpulver und Treibmittel verdichtet wird. Das Verdichten kann durch Strangpressen oder durch axiales Heißpressen erfolgen, wobei im Anschluss an das Verdichten der aufschäumbare Metallwerkstoff vorliegt. Das Metallpulver kann auf Basis einer Aluminiumlegierung oder Titanlegierung oder Nickellegierung oder Kobaltlegierung oder auch Eisenlegierung gebildet sein. Als Treibmittel wird vorzugsweise Titanhydrid verwendet.

In das wandartige Bauteil 11 mit der oben beschriebenen, sandwichartigen Struktur wird mindestens eine Öffnung bzw. Ausnehmung eingebracht, wobei in jede dieser Öffnungen ein rohrförmiges Bauteil 10 eingebracht wird. Nach dem Einstecken des oder jedes rohrförmigen Bauteils 10 in die entsprechende Öffnung des wandartigen Bauteils 11 wird die Anordnung aus dem wandartigen Bauteil 11 und dem rohrförmigen Bauteil 10 unter Aufschäumen des aufschäumbaren Metallwerkstoffs der Lage 14 erhitzt, um das oder jedes rohrförmige bzw. stabförmige Bauteil 10 mit dem wandartigen Bauteil 11 zu verbinden. Die obige Anordnung wird dabei bis knapp über den Schmelzpunkt des Metallwerkstoffs erhitzt, sodass der Metallwerkstoff geschmolzen wird und eine Gasfreisetzung des Treibmittels erfolgt. Durch die Gasfreisetzung des Treibmittels wird die Aufschäumung des Metallwerkstoffs ausgelöst. Das Aufschäumen wird so lange durchgeführt, bis ein definierter Schäumungsgrad erreicht ist, der für eine fest Verbindung zwischen den miteinander zu verbindenden Bauteilen sorgt. Sobald dieser definierte Schäumungsgrad erreicht ist, wird die Aufschäumung dadurch beendet, dass die Anordnung unter den Schmelzpunkt des verwendeten Metallpulvers abgekühlt wird. Hierdurch wird die gesamte Anordnung stabilisiert. Es sei darauf hingewiesen, dass beim Erhitzen lediglich die Lage 14 aus dem aufschäumbaren Metallwerkstoff aufgeschäumt wird, die rohrförmigen Elemente 12 und 13 hingegen sind beim Erhitzen volumenstabil und werden daher nicht aufgeschäumt.

Obwohl im Ausführungsbeispiel der Fig. 1 lediglich ein rohrförmiges Bauteil 10 mit dem wandartigen Bauteil 11 verbunden wird, ist es selbstverständlich möglich, dass mehrere rohrförmige Bauteile 10 mit einem wandartigen Bauteil 11 verbunden werden. Hierzu müssen lediglich mehrere Öffnungen in das wandartige Bauteil 11 eingebracht werden, in welche dann die entsprechenden rohrförmigen Bauteile 10 eingesteckt werden können. Es liegt im Sinne der hier vorliegenden Erfindung, das rohrförmige Bauteil 10 an einem Ende 15, mit welchem dasselbe in die entsprechende Öffnung des wandartigen Bauteils 11 eingesteckt wird, mit einem Lotmittel 16 zu beschichten. Beim Erhitzen der Anordnung wird das Lotmittel geschmolzen und hierdurch die Qualität der Verbindung zwischen dem rohrförmigen Bauteil 10 und dem wandartigen Bauteil 11 verbessert.

Die mit dem wandartigen Bauteil 11 zu verbindenden, rohrförmigen Bauteile 10 sind meist sehr dünnwandig. Um Beschädigungen derselben beim Aufschäumen zu vermeiden, wird im Sinne der hier vorliegenden Erfindung vorgeschlagen, das Ende 15 des rohrförmigen Bauteils 10, mit welchem dasselbe in die jeweilige Öffnung des wandartigen Bauteils 11 eingesteckt wird, vor dem Einstecken bzw. vor dem Erhitzen und damit Aufschäumen mit einem nicht-dargestellten, stopfenartigen Element zu verschließen. Hierdurch werden die Enden 15 der rohrförmigen Bauteile 10 vor dem Aufschäumen ausgesteift, sodass Beschädigungen derselben vermieden werden. Nach dem Aufschäumen wird das stopfenartigen Element aus dem jeweiligen Ende des rohrförmigen Bauteils 10 entfernt.

Das erfindungsgemäße Verfahren findet bevorzugt bei der Herstellung von Wärmetauschern Verwendung, um Lanzettenrohre mit zylinderförmigen Strömungsrohren zu verbinden. Das erfindungsgemäße Verfahren kann überall dort eingesetzt werden, wo insbesondere dünnwandige, rohrförmige Bauteile mit einem wandartigen Bauteil zu verbinden sind.

## Patentansprüche

1. Verfahren zum Verbinden von Bauteilen, nämlich zum Verbinden mindestens eines rohrförmigen oder stabförmigen Bauteils mit einem wandartigen Bauteil, mit folgenden Schritten:
a) Bereitstellen eines wandartigen Bauteils (11) ;
b) Bereitstellen mindestens eines rohrförmigen oder stabförmigen Bauteils (10);
c) Einbringen mindestens einer Öffnung in das wandartige Bauteil (11) zur Aufnahme des oder jedes rohrförmigen oder stabförmigen Bauteils (10);
d) Einstecken des oder jedes rohrförmigen oder stabförmigen Bauteils (10) in eine entsprechende Öffnung des wandartigen Bauteils (11);
e) Erhitzen der Anordnung aus dem wandartigen Bauteil (11) und dem oder jedem rohrförmigen oder stabförmigen Bauteil (10), **dadurch gekennzeichnet daß** das wandartige Bauteil (11) eine sandwichartige Struktur aus zwei plattenförmigen oder rohrförmigen Elementen (12, 13) mit einer dazwischen positionierten Lage (14) aus einem aufschäumbaren Metallwerkstoff aufweist; wobei der aufschäumbare Metallwerkstoff zum Verbinden des oder jedes rohrförmigen oder stabförmigen Bauteils (10) mit dem wandartigen Bauteil (11) beim Erhitzen der Anordnung aufschäumt.

2. Verfahren nach Anspruch 1,
**dadurch gekennzeichnet,**
**dass** das oder jedes rohrförmige oder stabförmige Bauteil (10) an einem Abschnitt bzw. Ende (15), mit welchen dasselbe in die entsprechende Öffnung des wandartigen Bauteils (11) eingesteckt wird, mit einem Lotmittel (16) beschichtet wird.

3. Verfahren nach Anspruch 1 oder 2,
**dadurch gekennzeichnet,**
**dass** die zwei plattenförmigen oder rohrförmigen Elemente (12, 13) des wandartigen Bauteils (11) beim Erhitzen volumenstabil sind und nicht aufgeschäumt werden.

4. Verfahren nach einem oder mehreren der Ansprüche 1 bis 3,
**dadurch gekennzeichnet,**
**dass** die zwischen den zwei plattenförmigen oder rohrförmigen Elementen (12, 13) positionierte Lage (14) aus dem aufschäumbaren Metallwerkstoff von einem gesinterten Metallpulver und mindestens einem Treibmittel gebildet wird.

5. Verfahren nach Anspruch 4,
**dadurch gekennzeichnet,**
**dass** das Metallpulver auf Basis einer Aluminiumlegierung oder Titanlegierung oder Nickellegierung oder Kobaltlegierung oder Eisenlegierung gebildet wird.

6. Verfahren nach Anspruch 4 oder 5,
**dadurch gekennzeichnet,**
**dass** das Treibmittel von Titanhydrid gebildet wird.

7. Verfahren nach einem oder mehreren der Ansprüche 1 bis 6,
**dadurch gekennzeichnet,**
**dass** der Abschnitt bzw. das Ende (15) des rohrförmigen Bauteils (10), mit welchen dasselbe in eine entsprechende Öffnung des wandartigen Bauteils (11) eingesteckt wird, vor dem Einstecken des rohrförmigen Bauteils (10) in die entsprechende Öffnung des wandartigen Bauteils (11) bzw. vor dem Erhitzen und damit Aufschäumen mit einem stopfenartigen Element verschlossen wird, wobei nach dem Aufschäumen das stopfenartige Element aus dem Abschnitt bzw. Ende (15) des rohrförmigen Bauteils (10) entfernt wird.

8. Verfahren nach einem oder mehreren der Ansprüche 1 bis 7,
**dadurch gekennzeichnet,**
**dass** bei Erreichen eines definierten Schäumungsgrads das Aufschäumen durch Abkühlung beendet wird.

9. Verfahren nach einem oder mehreren der Ansprüche 1 bis 8,
**dadurch gekennzeichnet,**
**dass** als wandartiges Bauteil (11) ein zylinderförmiges Strömungsrohr eines Wärmetauschers bereitgestellt wird, und dass als rohrförmige Bauteile (10) Lanzettenrohre eines Wärmetauschers bereitgestellt werden, die mit dem Strömungsrohr verbunden werden.

## Claims

1. Method for connecting components, i.e. for connecting at least one tubular or bar-shaped component to a wall-type component, comprising the following steps:
a) the provision of a wall-type component (11);
b) the provision of at least one tubular or bas-shaped component (10);
c) the placing of at least one opening in the wall-type component (11) for the accommodation of the tubular or bar-shaped component(s) (10);
d) the insertion of the tubular or bar-shaped component(s) (10) into a corresponding opening of the wall-type component (11);
e) the heating of the assembly comprising the wall-type component (11) and the tubular or bar-shaped component(s) (10), **characterised in that** the wall-type component (11) has a sandwich structure consisting of two plate-shaped or tubular elements (12, 13) with an interposed layer (14) of a foamable metal material, wherein the foamable metal material foams as the assembly is heated to connect the tubular or bar-shaped component(s) (10) to the wall-type component (11).

2. Method according to claim 1,
**characterised in that**
the tubular or bar-shaped component(s) (10) is (are) coated with a solder (16) at a section or end (15) where it is (they are) inserted into the corresponding opening of the wall-type component (11).

3. Method according to claim 1 or 2,
**characterised in that**
the two plate-shaped or tubular elements (12, 13) of the wall-type component (11) maintain a stable volume in the heating process and are not foamed.

4. Method according to one or more of claims 1 to 3,
**characterised in that**
the layer (14) of foamable metal material placed between the two plate-shaped or tubular elements (12, 13) is made from a sintered metal powder and at least one foaming agent.

5. Method according to claim 4,
**characterised in that**
the metal powder is based on an aluminium or titanium or nickel or cobalt or iron alloy.

6. Method according to claim 4 or 5,
**characterised in that**
the foaming agent is represented by titanium hydride.

7. Method according to one or more of claims 1 to 6,
**characterised in that**
the section or end (15) where the tubular component (10) is inserted into the corresponding opening of the wall-type component (11) is plugged with a plug-type element before the tubular component (10) is inserted into the corresponding opening of the wall-type component (11) and before the heating and foaming process, the plug-type element being removed from the section or end (15) of the tubular component (10) after the foaming process.

8. Method according to one or more of claims 1 to 7,
**characterised in that**
the foaming process is ended by cooling when a defined degree of foaming has been reached.

9. Method according to one or more of claims 1 to 8,
**characterised in that**
the wall-type component (11) provided is a cylindrical flow tube of a heat exchanger and the tubular components (10) provided are lancet tubes of a heat exchanger which are connected to the flow tube.

## Revendications

1. Procédé destiné à l'assemblage de pièces, à savoir l'assemblage d'au moins une pièce tubulaire ou en forme de barre et une pièce de type paroi, comportant les étapes suivantes :
a) mise à disposition d'une pièce de type paroi (11) ;
b) mise à disposition d'une pièce tubulaire ou en forme de barre (10) ;
c) réalisation d'au moins une ouverture dans la pièce de type paroi (11) en vue de recevoir la ou chaque pièce tubulaire ou en forme de barre (10) ;
d) introduction de la ou de chaque pièce tubulaire ou en forme de barre (10) dans une ouverture correspondante, ménagée dans la pièce de type paroi (11) ;
e) chauffage de l'ensemble formé par la pièce de type paroi (11) et la ou chaque pièce tubulaire ou en forme de barre (10),
**caractérisé en ce que** la pièce de type paroi (11) a une structure de type sandwich, formée par deux éléments (12, 13) en forme de plaque ou de tube, entre lesquels est positionnée une couche (14) réalisée dans un matériau métallique expansible, ledit matériau métallique expansible, destiné à assembler la ou chaque pièce tubulaire ou en forme de barre (10) avec la pièce de type paroi (11), étant expansé lors du chauffage de l'ensemble.

2. Procédé selon la revendication 1, **caractérisé en ce que** la ou chaque pièce tubulaire ou en forme de barre (10) est revêtue d'un agent de brasage (16) au niveau d'un tronçon, plus précisément d'une extrémité (15), par laquelle elle est enfichée dans l'ouverture correspondante de la pièce de type paroi (11).

3. Procédé selon la revendication 1 ou 2, **caractérisé en ce que** les deux éléments (12, 13), en forme de plaque ou de tube, de la pièce de type paroi (11) sont stables en volume lors du chauffage et ne subissent pas d'expansion.

4. Procédé selon une ou plusieurs des revendications 1 à 3, **caractérisé en ce que** la couche (14) en matériau métallique expansible, positionnée entre les éléments (12, 13) en forme de plaque ou de tube, est formée par une poudre métallique frittée et au moins un agent gonflant.

5. Procédé selon la revendication 4, **caractérisé en ce que** la poudre métallique est formée à base d'un alliage d'aluminium ou d'un alliage de titane ou d'un alliage de nickel ou d'un alliage de cobalt ou d'un alliage de fer.

6. Procédé selon la revendication 4 ou 5, **caractérisé en ce que** l'agent gonflant est formé par un hydrure de titane.

7. Procédé selon une ou plusieurs des revendications 1 à 6, **caractérisé en ce que** le tronçon, plus précisément l'extrémité (15) de la pièce tubulaire (10), par laquelle ladite pièce est enfichée dans une ouverture correspondante de la pièce de type paroi (11), est obturé par un élément en forme de bouchon avant l'introduction de la pièce tubulaire (10) dans l'ouverture correspondante de la pièce de type paroi (11) et/ou avant le chauffage et, donc, l'expansion, sachant qu'à la fin de l'expansion, l'élément en forme de bouchon est retiré hors du tronçon ou extrémité (15) de la pièce tubulaire (10).

8. Procédé selon une ou plusieurs des revendications 1 à 7, **caractérisé en ce que**, à l'obtention d'un degré d'expansion défini, le processus d'expansion est arrêté par refroidissement.

9. Procédé selon une ou plusieurs des revendications 1 à 8, **caractérisé en ce que** la pièce de type paroi (11) mise à disposition est un tube de circulation cylindrique d'un échangeur thermique, et **en ce que** les pièces tubulaires (10) mises à disposition sont des tubes en lancette d'un échangeur thermique, qui sont assemblés avec le tube de circulation.
